# EUROPEAN PATENT APPLICATION

(11) **EP 4 556 114 A1**
(43) Date of publication of application: **21.05.2025**
(21) Application number: 24212938.5
(22) Date of filing: 14.11.2024
(51) Int. Cl.: B01J 23/26, B01J 35/30, B01J 35/39, B01J 35/70, C01B 3/04, H01M 8/0606

(54) **CATALYST FOR AMMONIA OXIDATION, CATALYST SYSTEM AND METHOD OF PREPARING CATALYST FOR AMMONIA OXIDATION**

(30) Priority: 14.11.2023 KR 20230157334
(71) Applicant: SK Innovation Co., Ltd., Seoul 03188 (KR)
(72) Inventor: CHOI, Jae Suk, Daejeon 34124 (KR); SUNG, Jong Baek, Daejeon 34124 (KR); LEE, Seung Woo, Daejeon 34124 (KR); LEE, Chang Q, Daejeon 34124 (KR); IM, Ju Hwan, Daejeon 34124 (KR)
(74) Representative: Prüfer & Partner mbB Patentanwälte · Rechtsanwälte

(57) **Abstract**

According to embodiments of the present disclosure, the ammonia oxidation catalyst includes a metal oxide including titanium and chromium, wherein an energy band gap of the metal oxide measured by UV-Vis DRS is less than 1.4 eV. The catalyst system according to embodiments of the present disclosure includes: an ammonia decomposition reactor; and a catalyst unit which is located in a downstream region of the ammonia decomposition reactor, and includes the above-described ammonia oxidation catalyst.

## Description

### [BACKGROUND OF THE INVENTION]

### 1. Field of the Invention

The present disclosure relates to a catalyst for ammonia oxidation ("an ammonia oxidation catalyst"), a method of preparing the ammonia oxidation catalyst and a catalyst system including the ammonia oxidation catalyst.

### FIG. 6

### 2. Description of the Related Art

Recently, due to problems of environmental pollution, techniques for reducing greenhouse gases or harmful gases in the atmosphere are being developed. Accordingly, there is a growing demand for a renewable alternative energy to replace the use of fossil fuels such as petroleum and coal. Hydrogen may be mainly used as one of the renewable alternative energy.

Ammonia (NH₃) is a carbon-free fuel and may efficiently store and transport hydrogen. For example, ammonia may be decomposed to generate hydrogen (H₂) and nitrogen (N₂), and the hydrogen generated from the ammonia may be supplied to a fuel cell and the like. However, in order to supply the hydrogen through a decomposition reaction of ammonia, an excess of ammonia may be required, and unreacted products that have not been converted into hydrogen among the supplied ammonia may be released into the atmosphere as exhaust gases.

Since ammonia is a flammable and toxic gas, and may result in a secondary pollutant, it is necessary for the ammonia to be converted into an environmentally harmless component before it is released into the atmosphere. For example, a catalyst for selective ammonia oxidation may be used to efficiently remove residual ammonia while suppressing the generation of harmful gases. Accordingly, ammonia may be selectively decomposed into nitrogen (N₂) and water (H₂O).

However, when a high concentration of oxygen is injected into a reaction for the selective oxidation of ammonia, the oxygen may react with hydrogen (H₂) produced through the ammonia decomposition reaction, or react with nitrogen to generate nitrogen oxides (NOx) such as NO or NO₂, etc. Since the hydrogen is consumed by the oxygen, an overall production efficiency of hydrogen may be decreased, and environmental pollution may occur due to the nitrogen oxides. Therefore, the development of an ammonia oxidation catalyst capable of efficiently removing ammonia while suppressing the consumption of hydrogen and generation of nitrogen oxides is required.

### [SUMMARY OF THE INVENTION]

An object of the present disclosure is to provide an ammonia oxidation catalyst which may selectively oxidize ammonia.

Another object of the present disclosure is to provide a method of preparing an ammonia oxidation catalyst.

In addition, another object of the present disclosure is to provide a catalyst system which includes the above-described ammonia oxidation catalyst.

To achieve the above objects, a catalyst for ammonia oxidation according to embodiments the present disclosure includes a metal oxide including titanium and chromium, wherein an energy band gap of the metal oxide measured by UV-Vis diffuse reflectance spectroscopy (DRS) may be less than 1.4 eV.

In some embodiments, the energy band gap of the metal oxide may be 0.2 eV or more and less than 1.4 eV.

In some embodiments, a content of the chromium may be 0.10 to 0.30 moles based on a total 1 mole of titanium and chromium on an elemental basis.

In some embodiments, the metal oxide may have a crystal structure. Preferably, the crystal structure may be a titanium oxide crystal structure. In some embodiments, the chromium may be doped into the titanium oxide crystal structure, and/or chromium may be present in the metal oxide by showing XRD peaks corresponding to Cr₂O₃. The XRD peaks corresponding to Cr₂O₃ may appear at 35° to 38° and 42° to 45° of 2 theta.

In some embodiments, the metal oxide may include an anatase phase.

In some embodiments, in an ammonia oxidation reaction by the ammonia oxidation catalyst, an amount of nitrogen oxide (NOx) generated may be 200 ppm or less when measured under conditions where a reaction temperature is 200°C to 400°C and a concentration ratio of O₂ to NH₃ is 2.2 or more.

In a method of preparing a catalyst for ammonia oxidation according to embodiments the present disclosure, a chromium compound and a titanium compound may be mixed in an organic solvent to prepare a first mixture. Water may be added to the first mixture to prepare a second mixture. The second mixture may be gelated to prepare a precursor solution. The precursor solution may be subjected to heat treatment.

In some embodiments, the organic solvent may include an alcohol solvent.

In some embodiments, the second mixture may have a pH of 5 or more.

In some embodiments, the step of performing heat treatment on the precursor solution may include: drying the precursor solution at a temperature of 70°C to 125°C; and performing calcination on the precursor solution at a temperature of 350°C to 600°C.

In a further aspect, the present disclosure relates to the use of a catalyst comprising a metal oxide which comprises titanium and chromium, for an ammonia oxidation reaction in which ammonia reacts with oxygen (O₂) to selectively produce the nitrogen gas (N₂) gas, optionally further producing water (H₂O), while a reaction between nitrogen and oxygen and a reaction between oxygen and hydrogen may be suppressed, such that an amount of nitrogen oxides generated may be decreased, preferably wherein the amount of nitrogen oxide (NOx) generated is 200 ppm or less.

In embodiments concerning such use, the catalyst for ammonia oxidation is defined in accordance with the embodiments the present disclosure related to the catalyst for ammonia oxidation.

A catalyst system according to embodiments the present disclosure includes: an ammonia decomposition reactor; and a catalyst unit which is located in a downstream region of the ammonia decomposition reactor and includes the ammonia oxidation catalyst according to the above-described embodiments.

In some embodiments, the catalyst system may further include an ammonia supply unit which is located in an upstream region of the ammonia decomposition reactor.

In some embodiments, the catalyst system may further include an ammonia adsorption unit which is located in a downstream region of the ammonia decomposition reactor and includes an ammonia selective adsorbent.

In some embodiments, the ammonia adsorption unit may be located in a downstream region of the catalyst unit.

In some embodiments, the catalyst system may include a fuel cell configured to receive hydrogen from the catalyst unit.

The ammonia oxidation catalyst according to embodiments of the present disclosure may promote a selective reaction between oxygen and ammonia. Therefore, an ammonia removal efficiency may be improved even under conditions of low concentration of oxygen while suppressing the consumption of hydrogen and generation of nitrogen oxides.

In the method of preparing the ammonia oxidation catalyst according to embodiments of the present disclosure, chromium oxide and titanium alkoxide are gelated under a predetermined mixing condition. Accordingly, chromium may be substituted with titanium in a crystal lattice of titanium dioxide, thus to suppress the generation of chromium oxides (CrOₓ).

The catalyst system according to embodiments of the present disclosure includes the ammonia oxidation catalyst. Thereby, a supply amount of oxygen may be reduced, and the generation of nitrogen oxides may be suppressed, thus to provide a high-purity hydrogen gas to the fuel cell.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a schematic process flowchart for describing a method of preparing an ammonia oxidation catalyst according to exemplary embodiments;
FIG. 2 is a process flowchart for describing a catalyst system according to exemplary embodiments;
FIG. 3 is a process flowchart for describing a catalyst system according to exemplary embodiments;
FIG. 4 is an XRD graph of a metal oxide according to examples;
FIG. 5 is a graph illustrating the gas concentration when using ammonia oxidation catalysts of Example 1 and comparative examples;
FIGS. 6a and 6b are graphs illustrating the gas concentration when using an ammonia oxidation catalyst of Example 2;
FIG. 7 is a graph illustrating the gas concentration when using an ammonia oxidation catalyst of Example 1; and
FIGS. 8a to 8d are graphs illustrating the gas concentration when using an ammonia oxidation catalyst of Comparative Example 2.

### [DETAILED DESCRIPTION OF THE INVENTION]

According to embodiments of the present disclosure, there is provided an ammonia oxidation catalyst.

According to embodiments of the present disclosure, there is provided a catalyst system including the ammonia oxidation catalyst.

Hereinafter, embodiments of the present disclosure will be described in more detail.

An ammonia oxidation catalyst according to embodiments of the present disclosure includes a metal oxide including titanium and chromium. The ammonia oxidation catalyst may selectively promote an oxidation reaction of ammonia (NH₃) to convert the ammonia into a nitrogen gas. The ammonia oxidation reaction refers to a reaction in which ammonia reacts with oxygen (O₂) to produce the nitrogen gas. Besides nitrogen (N₂) gas, the ammonia oxidation reaction may produce water (H₂O).

The metal oxide may have crystal structure, in particular a titanium oxide crystal structure. Chromium may be doped into the titanium oxide within the metal oxide. For example, some of titanium atoms may be substituted with chromium atoms within the crystal structure of the titanium oxide, or chromium atoms may be positioned at oxygen vacancies, which are positions where oxygen is missed in the crystal structure of the titanium oxide, or chromium atoms may be positioned in empty spaces within the lattices of titanium and oxygen, thereby resulting in interstitial doping.

Accordingly, stability of the ammonia oxidation catalyst may be improved, and specific surface area and active site of the catalyst may be increased, thereby further promoting the oxidation reaction of ammonia.

According to exemplary embodiments, the metal oxide may have a crystal structure of titanium dioxide (TiO₂). For example, the crystal lattice of the metal oxide may be substantially the same as the crystal lattice of titanium dioxide.

In some embodiments, chromium may be incorporated into the crystal structure of the titanium dioxide. For example, some of the titanium atoms in the crystal lattice of the titanium dioxide may be substituted with chromium atoms. When the ammonia oxidation catalyst has the crystal structure of titanium dioxide and includes chromium in the crystal structure, both the structural stability and the catalytic activity may be improved.

Since the ammonia oxidation catalyst according to exemplary embodiments has the above-described crystal structure, the ammonia selectivity and the ammonia removal efficiency may be increased. Accordingly, the ammonia removal efficiency may be improved even under conditions of low concentration of oxygen, and the consumption of hydrogen due to high concentration of oxygen may be prevented. In addition, a reaction between nitrogen and oxygen may be suppressed, such that an amount of nitrogen oxides generated may be decreased.

An energy band gap of the metal oxide is less than 1.4 eV. For example, the energy band gap of the metal oxide may be 0.2 eV or more and less than 1.4 eV. The energy band gap of the metal oxide may be measured by UV-Vis diffuse reflectance spectroscopy (UV-Vis DRS).

The energy band gap may be measured as an indicator of a degree where chromium atoms are substituted or doped into the crystal structure of the titanium dioxide. For example, even if the contents of chromium atoms included in the metal oxide are the same, crystal forms of the metal oxide may be different from each other depending on whether the chromium atoms exist in the crystal lattice of titanium oxide (TiOₓ) and when the chromium atoms exist in the crystal structure of chromium oxide (CrOₓ, such as Cr₂O₃). Accordingly, the catalytic activity and properties of the ammonia oxidation catalyst may vary depending on the crystal form of the metal oxide.

A new valence band is provided due to a change in an electronic structure caused by the chromium (Cr) incorporated in the crystal structure of the titanium oxide, and the energy band gap of the metal oxide may be shifted to a lower value.

The ammonia oxidation catalyst may include a metal oxide having the energy band gap within the above range, such that the ammonia oxidation reaction and ammonia selectivity may be improved. Accordingly, the selective oxidation reaction for ammonia may be promoted even at a low oxygen partial pressure, and the consumption of hydrogen and the amount of the nitrogen oxides generated may be decreased.

In one embodiment, the energy band gap of the metal oxide may be 0.2 eV or more and less than 1.4 eV, or 0.5 eV to 1.3 eV, or 0.8 eV to 1.3 eV. Within the above range, a ratio of the chromium oxide in the crystal structure of the metal oxide may be reduced, and the reaction selectivity and reaction efficiency for ammonia may be further enhanced.

In some embodiments, a peak position of a binding energy of Cr in the metal oxide may be higher than the peak position of the binding energy of Cr in the chromium oxide (e.g., Cr₂O₃). The peak position may mean the peak median value.

For example, the position of a peak in the Cr 2p energy spectrum of the metal oxide measured by X-ray photoelectron spectroscopy (XPS) measurement may be higher by 0.5 eV or more, for example, 0.5 eV to 1.5 eV, than the position of the peak in the Cr 2p spectrum of the Cr₂O₃.

In some embodiments, the metal oxide may not include chromium oxide (CrOₓ). For example, the metal oxide may not have a crystal structure of Cr₂O₃. Accordingly, the ammonia selectivity may be further enhanced while further promoting the ammonia oxidation reaction of the ammonia oxidation catalyst. Accordingly, only ammonia may be selectively removed while suppressing the reaction between oxygen and hydrogen.

For example, the crystal structure of the metal oxide may be measured through X-ray diffraction (XRD) analysis. In the XRD graph of the metal oxide, no peak may be observed within the wavenumber range corresponding to Cr₂O₃. Optionally, one or more peaks corresponding to Cr₂O₃ may be observed within the wavenumber range in the XRD graph of the metal oxide. The XRD peaks corresponding to Cr₂O₃ may appear at 35° to 38° and 42° to 45° of 2 theta.

In some embodiments, a content of the chromium may be 0.05 moles to 0.30 moles based on a total 1 mole of titanium and chromium on an elemental basis. Within the above range, the ammonia selectivity may be further improved, and the reaction of hydrogen or nitrogen with oxygen may be further suppressed. Accordingly, the ammonia removal efficiency may be improved while suppressing the consumption of hydrogen and generation of nitrogen oxides.

In one embodiment, the content of the chromium may be 0.10 moles to 0.30 moles, 0.10 moles to 0.25 moles, or 0.10 moles to 0.20 moles based on the total 1 mole of titanium and chromium on the elemental basis. Within the above range, the reactivity for ammonia in a high-temperature environment may be further enhanced while the ammonia oxidation catalyst has high activity.

In some embodiments, the metal oxide may have a crystalline structure. For example, the metal oxide may not include, i.e. exclude, an amorphous structure.

In one embodiment, the metal oxide may have an anatase phase. For example, an anatase phase may mean an anatase crystal phase. Accordingly, the stability and activity of the ammonia oxidation catalyst may be further improved.

In one embodiment, the metal oxide may be represented by Formula 1 below.

[Formula 1] CrₓTi₁₋ₓO₂

In the Formula 1, x may be 0.05 to 0.30, 0.1 to 0.3, 0.1 to 0.25, or 0.1 to 0.2.

In some embodiments, the metal oxide may have a specific surface area of, for example, 50 m²/g to 150 m²/g or 80 to 130 m²/g. The specific surface area may be measured through the Brunauer-Emmett-Teller (BET) method by nitrogen (N₂) adsorption.

In one embodiment, the metal oxide may have a specific surface area of 85 m²/g to 125 m²/g, 90 m²/g to 120 m²/g, or 100 m²/g to 120 m²/g. Within the above range, the oxidation reaction and selectivity of ammonia may be further improved.

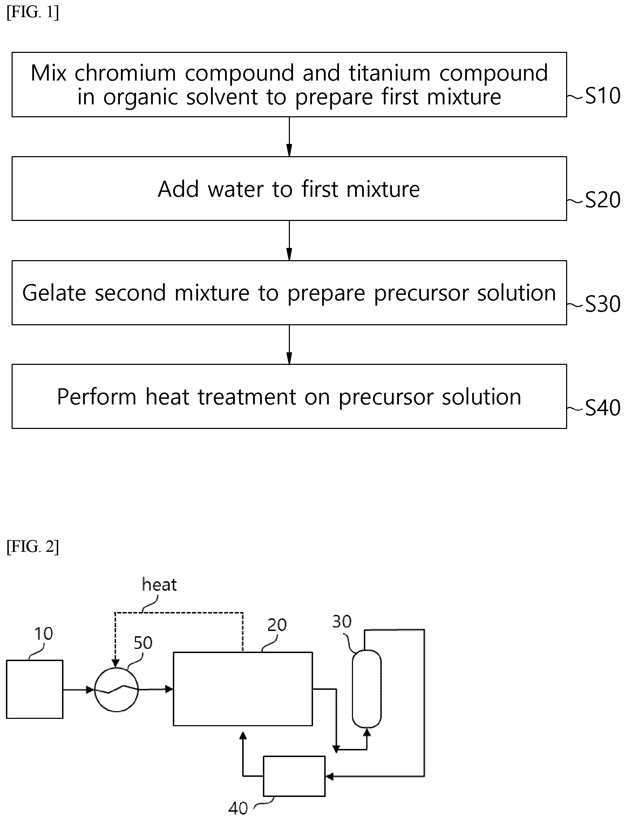

FIG. 1 is a schematic process flowchart for describing a method of preparing an ammonia oxidation catalyst according to exemplary embodiments.

Referring to FIG. 1, a chromium compound and a titanium compound are mixed in an organic solvent to prepare a first mixture (step S10).

In some embodiments, the organic solvent may include an alcohol solvent. For example, the organic solvent may include ethanol, propanol, isopropanol, butanol and the like. When the organic solvent includes the alcohol solvent, compatibility with precursor compounds may be further enhanced. In addition, when using the alcohol solvent as a base solvent, a gelation reaction may be promoted even with the addition of a small amount of water.

In one embodiment, the organic solvent may include isopropanol.

In some embodiments, the chromium compound may include a nitrate, chloride, bromide, fluoride, hydroxide, carbonate, acetate, sulfate of chromium., etc.

In one embodiment, the chromium compound may include chromium nitrate.

In some embodiments, the titanium compound may include an alkoxide, nitrate, chloride, bromide, fluoride, hydroxide, carbonate, acetate, sulfate, etc. of titanium.

In one embodiment, the titanium compound may include titanium alkoxide. When including the titanium alkoxide as the titanium compound, compatibility and affinity with the alcohol solvent may be further enhanced, and a crystal structure of titanium oxide may be formed through a gelation reaction and a heat treatment reaction.

For example, the titanium compound may include titanium tetraisopropoxide.

The chromium compound and the titanium compound may be introduced together into the organic solvent, thereby allowing chromium to be efficiently incorporated into the crystal structure of titanium oxide. For example, when the titanium compound is first introduced into the organic solvent and mixed, dispersibility of the first mixture is reduced, and chromium oxide having a crystal form separate from titanium oxide may be formed.

In one embodiment, a mixing speed of the chromium compound and the titanium compound in the organic solvent may be 300 rpm to 600 rpm, 350 rpm to 550 rpm, or 400 rpm to 500 rpm.

In one embodiment, the mixing process may be performed for 10 minutes to 240 minutes, 30 minutes to 180 minutes, or 60 minutes to 120 minutes.

In one embodiment, the temperature in the mixing process may be 2°C to 40°C.

In some embodiments, the chromium compound and the titanium compound may be added so that the chromium is added in an amount of 0.05 moles to 0.30 moles based on the total 1 mole of titanium and chromium on the elemental basis.

In one embodiment, among the chromium compound and the titanium compound, the content of chromium may be 0.1 moles to 0.3 moles, 0.1 moles to 0.25 moles, or 0.1 moles to 0.2 moles based on the total 1 mole of titanium and chromium on the elemental basis.

Water is added to the first mixture to prepare a second mixture (step S20).

Water may be added to the first mixture to perform a sol-gel reaction for the second mixture.

In some embodiments, an amount of water added may be 1 to 30 parts by weight ("wt. parts") based on 100 wt. parts of the organic solvent. Within the above range, the sol-gel reaction of the second mixture may be performed more efficiently, and the crystallinity of the ammonia oxidation catalyst may be easily controlled to a desired range by heat treatment to be described below.

In one embodiment, the amount of water added may be 1 wt. part to 25 wt. parts, 2 wt. parts to 25 wt. parts, or 2 wt. parts to 20 wt. parts based on 100 wt. parts of the organic solvent.

In some embodiments, the second mixture may have a pH of 5 or more. For example, the second mixture may have a pH of 5 to 8, or 6 to 8. Within the above range, the titanium compound, for example titanium oxide may be more efficiently converted into titanium oxide by gelation of the second mixture, thereby allowing chromium atoms to be easily substituted into the crystal lattice of the titanium oxide.

In one embodiment, nitric acid may be added to the first mixture to perform a sol-gel reaction for the second mixture.

The second mixture is gelated to form a precursor solution (step S30).

As the second mixture is gelated, chromium atoms may be easily incorporated into the crystal lattice of titanium oxide through a heat treatment process to be described below. Accordingly, chromium may be substituted with titanium atoms of the titanium oxide crystal structure while suppressing the production of the crystal structure of chromium oxide.

In one embodiment, the temperature in the gelation process may be 15°C to 30°C.

In one embodiment, the gelation process may be performed at a rotation speed of 100 rpm to 500 rpm.

In one embodiment, the gelation process may be performed for 15 hours to 30 hours, or 20 hours to 30 hours.

In some embodiments, the gelation process may include a stirring process and an aging process performed on the second mixture.

For example, the second mixture may be stirred at a rotation speed of 100 rpm to 500 rpm, and then left in a constant-temperature device for a predetermined period of time.

In one embodiment, the stirring process may be performed at a temperature of 15°C to 30°C for 30 minutes to 4 hours, or 1 hour to 3 hours.

In one embodiment, the aging process may be performed at a temperature in a range of 15°C to 30°C. In one embodiment, the aging process may be performed for 10 hours to 30 hours, or 20 hours to 30 hours.

An ammonia oxidation catalyst is prepared by performing heat treatment on the precursor solution (step S40).

In one embodiment, the precursor solution may be dried at a temperature of 70°C to 125°C, 80°C to 120°C, or 85°C to 110°C.

In one embodiment, the precursor solution may be dried, and subjected to calcination at a temperature of 350°C to 600°C, 400°C to 550°C, or 450°C to 550°C.

FIG. 2 is a process flowchart for describing a catalyst system according to exemplary embodiments.

The catalyst system according to embodiments of the present disclosure may include the ammonia oxidation catalyst according to the above-described embodiments.

The catalyst system may include an ammonia decomposition reactor 20 and a catalyst unit 30. The catalyst unit 30 may include the ammonia oxidation catalyst.

Ammonia may be decomposed in the ammonia decomposition reactor 20. For example, ammonia (NH₃) may be decomposed to generate hydrogen (H₂) within the ammonia decomposition reactor 20.

As the ammonia decomposition reaction, a thermal decomposition reaction or a decomposition reaction using a reduction catalyst may be performed.

In one embodiment, the ammonia decomposition reactor 20 may also include an ammonia oxidation catalyst. The ammonia oxidation catalyst may be arranged in a stacked manner within the ammonia decomposition reactor 20. While the ammonia passes through the ammonia decomposition reactor 20, hydrogen gas may be generated.

In one embodiment, the ammonia decomposition reactor 20 may include a burner. The temperature in the ammonia decomposition reactor 20 may be increased by the burner, and heat energy required for ammonia decomposition may be supplied.

The catalyst system may further include an ammonia supply unit 10. The ammonia supply unit 10 may be located in an upstream region of the ammonia decomposition reactor 20. Ammonia may be supplied to the ammonia decomposition reactor 20 through the ammonia supply unit 10. In one embodiment, the ammonia supply unit 10 may include an ammonia storage tank.

For example, the ammonia gas supplied from the ammonia supply unit 10 may be decomposed into hydrogen (H₂) and nitrogen (N₂) in the ammonia decomposition reactor 20.

In some embodiments, a heat exchanger 50 may be arranged between the ammonia supply unit 10 and the ammonia decomposition reactor 20. The heat exchanger 50 may receive liquid ammonia from the ammonia supply unit 10 and vaporize the same. Accordingly, gaseous ammonia may be supplied to the ammonia decomposition reactor 20.

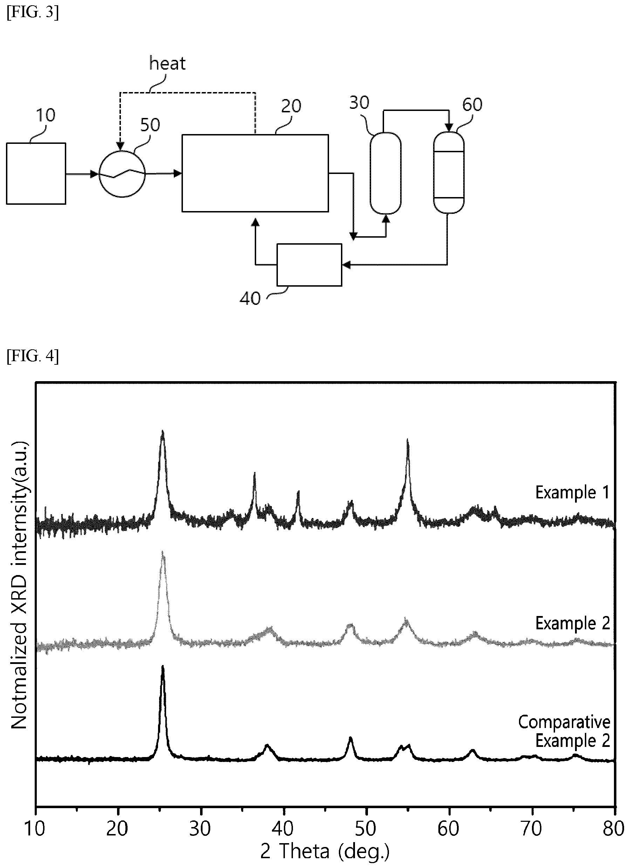

In one embodiment, the heat exchanger 50 may receive heat from a combustion gas discharged from the burner in the ammonia decomposition reactor 20. Heat flow between the ammonia decomposition reactor 20 and the heat exchanger 50 is indicated by dotted line arrows in FIGS. 2 and 3.

The catalyst unit 30 may be located in a downstream region of the ammonia decomposition reactor 20. The ammonia oxidation catalyst may be arranged in a stacked manner within the catalyst unit 30.

A reaction gas and an oxygen gas may be supplied from the ammonia decomposition reactor 20 to the catalyst unit 30. The reaction gas may contain ammonia that has not reacted during the ammonia decomposition reaction. The ammonia and the oxygen gas may be caused to effect an oxidation reaction by the catalyst unit 30, thereby removing unreacted ammonia.

In one embodiment, the reaction gas supplied from the ammonia decomposition reactor 20 to the catalyst unit 30 may include hydrogen and nitrogen generated during the ammonia decomposition process. The ammonia oxidation catalyst may have high selectivity for ammonia thus to selectively remove only ammonia without consuming hydrogen generated during the ammonia decomposition process. Accordingly, the concentration of ammonia and the concentration of nitrogen oxides may be decreased while maintaining the concentration of hydrogen at a high level through the catalyst unit 30.

In one embodiment, the amount of oxygen gas supplied may be 8.9 or less, 6.7 or less, 4.4 or less, or 2.2 or less on a ppm basis relative to the ammonia concentration in the reaction gas. Even if the amount of oxygen gas supplied is small, the oxidation reaction for ammonia may be selectively promoted by the ammonia oxidation catalyst. Accordingly, the amount of oxygen gas supplied may be controlled to suppress the consumption of hydrogen gas and generation of nitrogen oxides while improving the ammonia removal efficiency.

In one embodiment, the reaction temperature in the ammonia decomposition reactor 20 may be 250°C to 500°C, 280°C to 450°C, or 300°C to 400°C. Within the above range, the consumption of hydrogen and generation of nitrogen oxides may be suppressed, and the ammonia removal efficiency may be further increased.

In one embodiment, in the ammonia oxidation reaction using the ammonia oxidation catalyst, an amount of nitrogen oxide (NOx) generated may be 200 ppm or less, which is measured under conditions where the reaction temperature is 200°C to 400°C and a concentration ratio of O₂ to NH₃ is 2.2 or more.

For example, the content of NOx generated by the oxidation reaction of the ammonia oxidation catalyst for ammonia and oxygen-containing gas under the conditions of 200°C to 400°C may be 150 ppm or less, or 120 ppm or less. The concentration ratio of O₂ to NH₃ in the reaction gas may be 2.2 to 8.9, 2.2 to 6.7, or 2.2 to 4.4 on the ppm basis.

FIG. 3 is a process flowchart illustrating a catalyst system according to exemplary embodiments.

Referring to FIG. 3, the catalyst system may further include an ammonia adsorption unit 60. The ammonia adsorption unit 60 may be located in a downstream region of the ammonia decomposition reactor 20.

The ammonia adsorption unit 60 may include an ammonia selective adsorbent. Accordingly, the ammonia adsorption unit 60 may selectively adsorb and remove unreacted ammonia. The ammonia concentration may be decreased by the ammonia adsorption unit 60, and high-purity hydrogen may be produced.

In some embodiments, the ammonia adsorption unit 60 may have a pressure swing adsorption (PSA) process or a temperature swing adsorption (TSA) process.

In some embodiments, the ammonia adsorption unit 60 may be located in a downstream region of the catalyst unit 30. Accordingly, ammonia remaining without being oxidized in the catalyst unit 30 may be removed by the ammonia adsorption unit.

In some embodiments, the ammonia adsorption unit 60 may also be located in an upstream region of the catalyst unit 30. For example, the ammonia adsorption unit 60 may be located between the ammonia decomposition reactor 20 and the catalyst unit 30.

In one embodiment, the ammonia selective adsorbent may include a metal oxide including aluminum and silicon. For example, the ammonia selective adsorbent may include aluminosilicate. In one embodiment, the aluminosilicate may be carried or doped with an alkali metal ion (e.g., sodium ion, calcium ion, potassium ion, etc.).

According to exemplary embodiments, hydrogen gas purified in the catalyst unit 30 or the ammonia adsorption unit 60 may be supplied to a fuel cell 40. For example, the fuel cell 40 may be a hydrogen fuel cell 40.

The concentrations of ammonia and nitrogen oxides may be decreased without consuming hydrogen by the ammonia oxidation catalyst. Accordingly, the gas generated in the ammonia decomposition reactor 20 while passing through the catalyst unit 30 may be purified into high-purity hydrogen gas. Accordingly, a power generation efficiency of the fuel cell 40 may be further improved.

In one embodiment, the gas on which the reaction have been completed in the fuel cell 40 may be supplied back to the burner of the ammonia decomposition reactor 20. Then, the gas may be used as a heat source for the ammonia decomposition reaction.

### Preparative Example: Preparation of ammonia oxidation catalyst

### (1) Example 1

Chromium nitrate (Cr(NO₃)₃) and titanium isopropoxide (TTIP) were added to 250 g of isopropyl alcohol (IPA) and stirred at room temperature and a rotation speed of 450 rpm for 30 minutes to prepare a first mixture. The chromium nitrate and the titanium isopropoxide were added so that a molar ratio of chromium and titanium satisfied 30:70 and a mass of the final oxide catalyst after calcination was 6 g.

12 g of deionized water was added to the first mixture to prepare a second mixture. The second mixture was stirred at a temperature of 25°C and a rotation speed of 450 rpm for 2 hours, and stored at 25°C for 24 hours to obtain a precursor solution in the form of a gel.

The precursor solution was subjected to heat treatment at a temperature of 100°C for 24 hours to obtain a powder. The powder was subjected to heat treatment at a temperature of 500°C for 4 hours to prepare an ammonia oxidation catalyst.

### (2) Example 2

An ammonia oxidation catalyst was prepared in the same manner as in Example 1, except that the chromium nitrate and the titanium isopropoxide were added so that the molar ratio of chromium and titanium was 15:85.

### (3) Comparative Example 1

An ammonia oxidation catalyst was prepared in the same manner as in Example 1, except that the chromium nitrate and the titanium isopropoxide were added so that the molar ratio of chromium and titanium was 5:95.

### (4) Comparative Example 2

6 g of chromium nitrate (Cr(NO₃)₃) was added to 100 mL of isopropyl alcohol (IPA) and stirred at room temperature and a rotation speed of 450 rpm for 30 minutes to prepare a first mixture.

A second mixture was prepared by adding 10 mL of propylene oxide to the first mixture. The second mixture was stirred at a temperature of 25°C and a rotation speed of 450 rpm for 12 hours to obtain a precursor solution in the form of a gel.

The precursor solution was subjected to heat treatment at a temperature of 100°C for 1 hour to obtain a powder. The powder was subj ected to heat treatment at a temperature of 400°C for 3 hours to prepare an ammonia oxidation catalyst.

### (5) Comparative Example 3

TiO₂ powder having a rutile crystalline phase was added to chromium nitrate hydrate (Cr(NO₃)₃·9H₂O) and stirred for 2 hours. After drying at room temperature for 24 hours, the mixture was subj ected to heat treatment at a temperature of 500°C for 4 hours to produce a metal oxide in which chromium oxide (CrOₓ) is carried on TiO₂. The amount of Cr carried on TiO₂ was adjusted to 10% by weight ("wt. %").

### (6) Comparative Example 4

An ammonia oxidation catalyst in which 2 wt. % of Pt is carried on an Al₂O₃ carrier was prepared.

### (7) Measurement of energy band gap

UV-Vis DRS analysis was performed on the metal oxides using a UV-Vis spectrometer (UV-VIS-NIR, Cary 5000) under conditions of 25°C and atmospheric pressure. The DRS absorption spectrum for the metal oxides was measured, and the energy band gap was calculated from the plot of (αhν)^{1/2} according to the photon energy (hv).

Measurement results are shown in Table 1 below.

**[TABLE 1]**

| | Cr:Ti (molar ratio) | Energy band gap (eV) |
|---|---|---|
| Example 1 | 30:70 | 0.8 |
| Example 2 | 15:85 | 1.3 |
| Comparative Example 1 | 5:95 | 1.4 |
| Comparative Example 2 | 100:0 | 3.2 |
| Comparative Example 3 | 14.5:85.5 | 2.4 |

### (8) XRD analysis

Crystal structures of the metal oxides of the examples and Comparative Example 1 were measured through X-ray diffraction analysis.

Specifically, the crystal structures of the composite oxides were measured by X-ray diffraction analysis (XRD) under conditions of 300 mA current, 50 kV voltage, Cu Kα radiation of wavelength (1.5428 Å), scanning speed of 5 degree min⁻¹, and 2θ = 10° to 80°.

FIG. 4 is an XRD graph of the metal oxides of the examples 1 and 2, and the comparative example 2.

Referring to FIG. 4, in the case of Example 1, peaks corresponding to Cr₂O₃ appeared at 35° to 38° and 42° to 45°.

In the case of Example 2 and Comparative Example 1, no crystal peak corresponding to Cr₂O₃ appeared in the XRD spectrum of the metal oxides, and the metal oxides had crystal peaks corresponding to TiO₂.

### (9) Specific surface area analysis

Specific surface areas of the metal oxides of the examples and Comparative Examples 1 to 3 were measured with the BET method by nitrogen gas adsorption using a specific surface area measuring device (TriStar II Plus, MICROMERITCS).

Measurement results are shown in Table 2 below.

**[TABLE 2]**

| | Specific surface area (m²/g) |
|---|---|
| Example 1 | 87 |
| Example 2 | 115 |
| Comparative Example 1 | 85 |
| Comparative Example 2 | 27 |
| Comparative Example 3 | 65 |

Referring to Table 2 above, the metal oxides of the examples had higher specific surface areas than the metal oxides of the comparative examples. In the case of Example 2, the metal oxide had a high specific surface area of 100 m²/g or more.

### Experimental Example 1

2.5 g of the ammonia catalyst was put into a fixed bed reactor, and subjected to reduction treatment with a mixture of H₂ and N₂ gas (H₂ 10% by volume) at a temperature of 400°C for 1 hour.

Then, ammonia oxidation reaction was evaluated using the reaction gas mixture. The flow rate of the reaction gas was controlled using a mass flow meter, and the space velocity of the reaction gas was 30,000 hr⁻¹.

The concentrations of oxygen and ammonia were adjusted to be about 2,300 ppm and about 1,050 ppm, respectively. The compositions of O₂, NH₃, H₂, He, and N₂ in the reaction gas were controlled as shown in Table 3 below.

**[TABLE 3]**

| Item | Concentration |
|---|---|
| O₂ | 2,344 ppm |
| NH₃ | 1,057 ppm |
| H₂ | 11.5% |
| He | 0.6% |
| N₂ | 87.6% |

The gas concentration after the reaction was measured by QMS (Dycor 2000, Ametek), and the concentrations of NH₃ and NO were measured using a gas analyzer (Airwell 7+e, Tunable Diode Laser Absorption Spectroscopy, Korea Industrial Gas) and a gas analyzer (CLD82 S, ECO Physics), respectively.

The temperature in the reactor was increased from 50°C to 450°C at a rate of temperature rise of 10°C/min, and the NH₃ concentration and NO concentration at each temperature were measured.

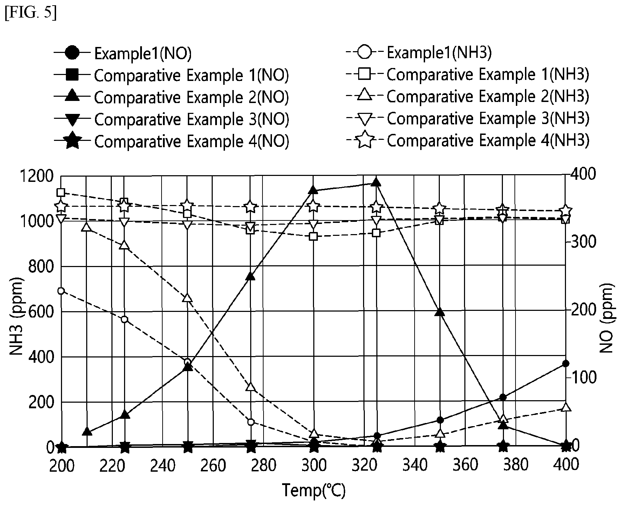

Evaluation results are shown in Table 4 and FIG. 5.

**[TABLE 4]**

| Temperat ure (°C) | Example 1 | | Comparative Example 1 | | Comparative Example 2 | | Comparative Example 3 | | Comparative Example 4 | |
|---|---|---|---|---|---|---|---|---|---|---|
| | NH₃ concent ration (ppm) | NO concent ration (ppm) | NH₃ concent ration (ppm) | NO concent ration (ppm) | NH₃ concent ration (ppm) | NO concent ration (ppm) | NH₃ concent ration (ppm) | NO concent ration (ppm) | NH₃ concent ration (ppm) | NO concent ration (ppm) |
| 200 | 700 | 0 | 1130 | 1 | 975 | 22 | 1012 | 0 | 1068 | 0 |
| 225 | 572 | 0 | 1091 | 2 | 896 | 48 | 999 | 0 | 1068 | 0 |
| 250 | 382 | 1 | 1041 | 4 | 659 | 119 | 988 | 0 | 1068 | 0 |
| 275 | 118 | 4 | 968 | 5 | 269 | 251 | 982 | 0 | 1064 | 0 |
| 300 | 18 | 8 | 932 | 3 | 57 | 378 | 993 | 0 | 1063 | 0 |
| 325 | 7 | 17 | 943 | 1 | 23 | 389 | 1004 | 0 | 1059 | 0 |
| 350 | 5 | 39 | 998 | 0 | 56 | 198 | 1009 | 0 | 1054 | 0 |
| 375 | 4 | 72 | 1012 | 0 | 119 | 31 | 1012 | 0 | 1045 | 0 |
| 400 | 3 | 122 | 1008 | 0 | 171 | 0 | 1012 | 0 | 1041 | 0 |

FIG. 5 is a graph illustrating the gas concentration when using ammonia oxidation catalysts of Example 1 and comparative examples.

Referring to FIG. 5, in the case of Example 1, the concentration of NH₃ was reduced to 10 ppm or less, and NO was generated at 10 ppm or less up to 300°C. In addition, the amount of NO generated at 400°C was measured to be 130 ppm or less.

In the case of Comparative Example 1, the content of chromium, which is an active metal, was low, such that ammonia did not react with oxygen, and the concentration of ammonia was not substantially decreased.

In the case of Comparative Example 2, the concentration of NH₃ was reduced to 23 ppm, but the amount of NO generated was increased to 300 ppm or more. In addition, when increasing the temperature to 300°C or higher, the concentration of NH₃ was increased due to the depletion of oxygen caused by the reaction between oxygen and hydrogen.

In the case of Comparative Example 3, all the oxygen injected for the oxidation of ammonia in the chromium oxide carried on TiO₂ reacted with hydrogen to be consumed, and ammonia was not removed due to the depletion of oxygen.

In the case of Comparative Example 4, ammonia did not react with oxygen, and the ammonia concentration was measured to be high in all temperature ranges.

### Experimental Example 2

For the examples and Comparative Example 2, the NH₃ concentration and NO concentration after the reaction were measured while changing the ratio of O₂/NH₃ in the reaction gas and the reaction temperature, respectively. The NH₃ concentration and NO concentration were measured when the gas concentration after the reaction reached a steady state.

The ratio of O₂/NH₃ was adjusted by changing only the concentrations of O₂ and NH₃ in the composition of the reaction gas shown in Table 3, and H₂, He and N₂ were each controlled to satisfy the ratios shown in Table 3.

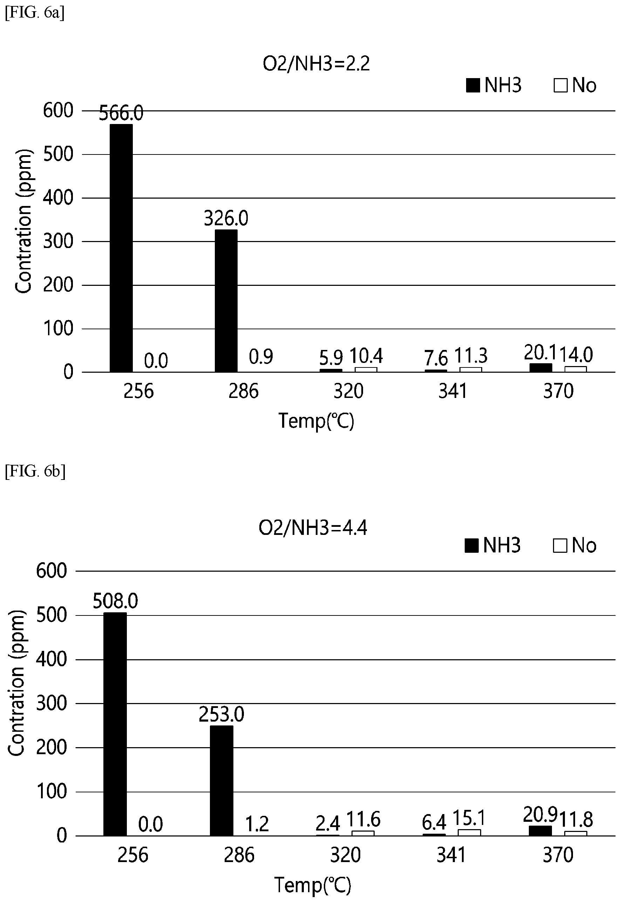

FIGS. 6a and 6b are graphs illustrating the gas concentration when using an ammonia oxidation catalyst of Example 2.

Specifically, the NH₃ concentration and NO concentration according to the temperature were measured when the ratios of O₂/NH₃ in the reaction gas were 2.2 and 4.4, respectively.

Referring to FIGS. 6a and 6b, in the case of Example 2, even when the ratio of O₂ and the reaction temperature were increased, the concentrations of NH₃ and NO in the gas after the reaction were low.

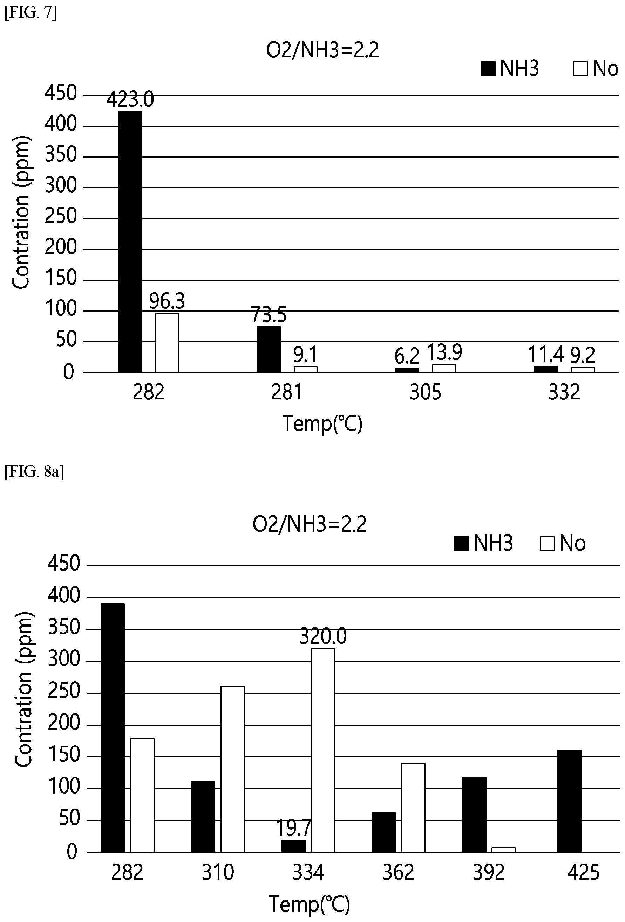

FIG. 7 is a graph illustrating the gas concentration when using an ammonia oxidation catalyst of Example 1.

Referring to FIG. 7, in the case of Example 1, the concentrations of NH₃ and NO in the gas after the reaction were low overall, and even when increasing the reaction temperature, the amount of NO generated was not increased.

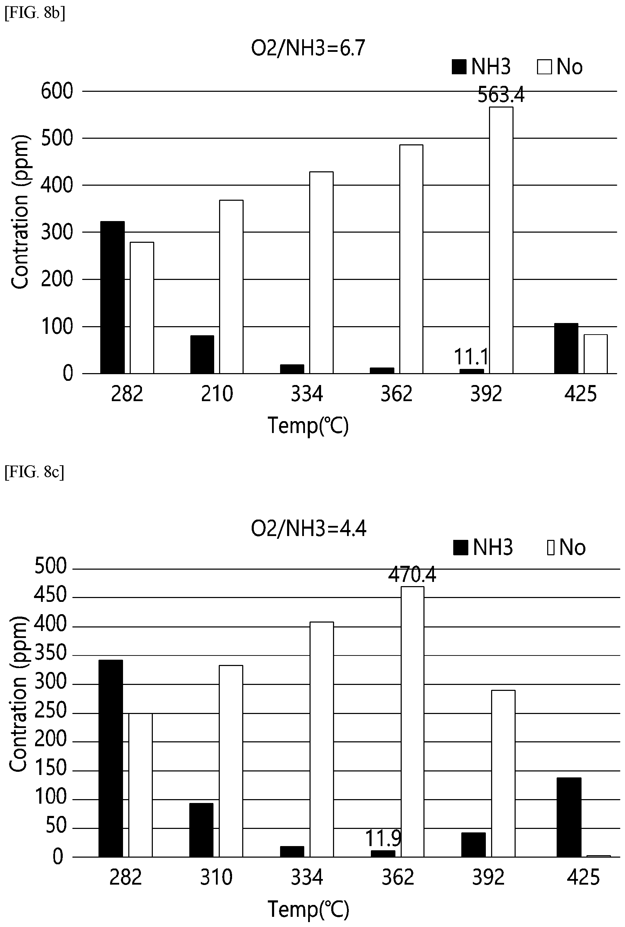

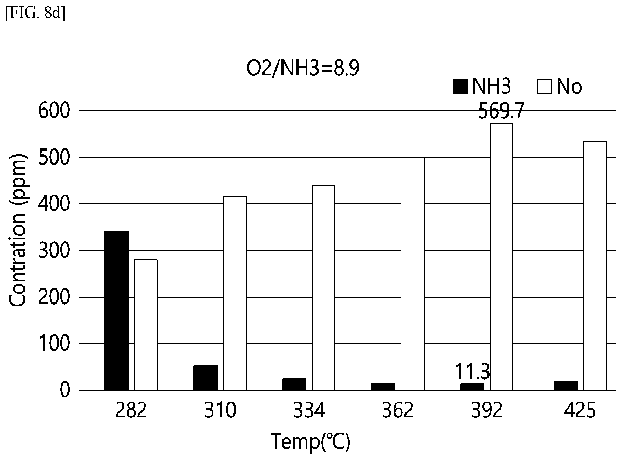

FIGS. 8a to 8d are graphs illustrating the gas concentration when using an ammonia oxidation catalyst of Comparative Example 2.

Specifically, when the ratios of O₂/NH₃ in the reaction gas were 2.2, 4.4, 6.7, and 8.9, respectively, the NH₃ concentration and NO concentration were measured according to the temperature.

Referring to FIGS. 8a to 8d, in the case of Comparative Example 2, the concentrations of NH₃ and NO in the gas after the reaction were high overall. In addition, as the reaction temperature was increased or the ratio of O₂ was increased, the amount of NO generated was greatly increased.

## Claims

1. A catalyst for ammonia oxidation comprising a metal oxide which comprises titanium and chromium,
wherein an energy band gap of the metal oxide measured by UV-Vis diffuse reflectance spectroscopy (DRS) is less than 1.4 eV.

2. The catalyst for ammonia oxidation according to claim 1, wherein the energy band gap of the metal oxide is 0.2 eV or more and less than 1.4 eV.

3. The catalyst for ammonia oxidation according to claim 1 or 2, wherein a content of the chromium is 0.10 to 0.30 moles based on a total 1 mole of titanium and chromium on an elemental basis.

4. The catalyst for ammonia oxidation according to any one of claims 1 to 3, wherein the metal oxide has a crystalline structure, preferably the metal oxide has a titanium oxide crystal structure, and the chromium is doped into the titanium oxide crystal structure, optionally wherein chromium is present in the metal oxide in a form of showing XRD peaks corresponding to Cr₂O₃ which appear at 35° to 38° and 42° to 45° 2theta.

5. The catalyst for ammonia oxidation according to any one of claims 1 to 4, wherein the metal oxide comprises an anatase phase.

6. The catalyst for ammonia oxidation according to any one of claims 1 to 5, wherein, when the ammonia oxidation catalyst is used in an ammonia oxidation reaction, an amount of nitrogen oxide (NOx) generated is 200 ppm or less when measured under conditions where a reaction temperature is 200°C to 400°C, and a concentration ratio of O₂ to NH₃ is 2.2 or more.

7. A method of preparing a catalyst for ammonia oxidation, the method comprising:
mixing a chromium compound and a titanium compound in an organic solvent to prepare a first mixture;
adding water to the first mixture to prepare a second mixture;
gelating the second mixture to prepare a precursor solution; and
performing heat treatment on the precursor solution.

8. The method according to claim 7, wherein the organic solvent comprises an alcohol solvent, and/or wherein the titanium compound is titanium alkoxide.

9. The method according to claim 7 or 8, wherein the second mixture has a pH of 5 or more, and/or wherein the chromium compound and the titanium compound are introduced together into the organic solvent.

10. The method according to any one of claims 7 to 9, wherein the step of performing heat treatment on the precursor solution comprises: drying the precursor solution at a temperature of 70°C to 125°C; and performing calcination on the precursor solution at a temperature of 350°C to 600°C.

11. Use of a catalyst comprising a metal oxide which comprises titanium and chromium, wherein an energy band gap of the metal oxide measured by UV-Vis diffuse reflectance spectroscopy (DRS) is less than 1.4 eV, for ammonia oxidation, preferably wherein the amount of nitrogen oxide (NOx) generated is 200 ppm or less.

12. A catalyst system comprising:
an ammonia decomposition reactor (20); and
a catalyst unit (30) which is located in a downstream region of the ammonia decomposition reactor (20) and comprises the ammonia oxidation catalyst according to any one of claims 1 to 6.

13. The catalyst system according to claim 12, further comprising an ammonia supply unit (10) which is located in an upstream region of the ammonia decomposition reactor (20).

14. The catalyst system according to claim 12 or 13, further comprising an ammonia adsorption unit (60) which is located in a downstream region of the ammonia decomposition reactor (20) and comprises an ammonia selective adsorbent,
preferably wherein the ammonia adsorption unit (60) is located in a downstream region or upstream region of the catalyst unit (30).

15. The catalyst system according to any one of claims 12 to 14, comprising a fuel cell (40) configured to receive hydrogen from the catalyst unit (30).
